# EUROPÄISCHE PATENTSCHRIFT

(11) **EP 0 970 919 B1**
(45) Veröffentlichungstag und Bekanntmachung des Hinweises auf die Patenterteilung: **03.12.2008**
(21) Anmeldenummer: 99113059.2
(22) Anmeldetag: 01.07.1999
(51) Int. Cl.: C02F 1/02, C02F 9/00, C02F 1/42

(54) **Vorrichtung zum Desinfizieren einer Wasserbehandlungseinheit**
Apparatus for the disinfection of a water treatment unit
Dispositif pour la désinfection d'une unité de traitement d'eau

(30) Priorität: 08.07.1998 AT 117998
(43) Veröffentlichungstag der Anmeldung: 12.01.2000
(73) Patentinhaber: Watercryst chemiefreie Wasserbehandlung GmbH, 6175 Kematen in Tirol (AT)
(72) Erfinder: Leiter, Klaus, Dr., 6176 Völs (AT); Walder, Gerhard, Dr., 6170 Zirl (AT)
(74) Vertreter: Torggler, Paul Norbert

(56) Entgegenhaltungen:
- EP-A- 0 372 293
- EP-A- 0 462 606
- EP-A- 0 621 239
- DE-A- 4 403 631
- DE-A- 19 633 574

## Beschreibung

Die Erfindung betrifft eine Trinkwasserhausinstallation mit einer Vorrichtung zum Desinfizieren einer Wasserbehandlungseinheit im Kaltwasserteil oder Warmwasserteil.

Der Einsatz von Ionenaustauschermaterialien, Adsorbentien- und Filtermaterialien sowie von Filtern (allgemein: Wasserbehandlungseinheiten) im Trinkwasserbereich ist aufgrund deren Verkeimungspotentials nicht unproblematisch. In verschiedenen Normen und Vorschriften wird festgelegt, wie der Einsatz dieser Materialien zu erfolgen hat.

Bei Ionenaustauschern beispielsweise schreibt die Norm DIN 19636 vor, daß in periodischen Abständen eine Desinfektion des Harzbettes und der Analge zu erfolgen hat. Üblicherweise geschieht diese Desinfektion über Chlorung des Harzbettes (beispielsweise durch elektrolytische Erzeugung des Chlors aus der NaCl-Sole während der Regeneration des Harzes oder durch Einbringen von Hypoclorit etc.). Die Verwendung von Chlor zur Desinfektion erfordert besondere Sorgfalt, da einerseits eine definierte Konzentration-Einwirkdauer zur sicheren Abtötung notwendig ist; andererseits schädigt Chlor die Matrix des Harzes und reduziert damit die Lebensdauer des Ionenaustauscherharzes. Desweiteren muß sichergestellt sein, daß das Harzbett nach der Chlordesinfektion ausreichend gespült wird, um die Grenzwerte für Chlor im Trinkwasser nicht zu überschreiten.

Bei Filtermaterialien (Sandfilter, Aktivkohle, Kalkfilter), aber auch herkömmlichen Wasserfiltern versucht man das Verkeimungspotential durch vorgeschriebene Rückspül- und Austauschintervalle zu minimieren. Einen sicheren Schutz vor Verkeimung bieten aber dies Maßnahmen nicht. Man versucht daher oft solche Anlagen durch eine nachgeschaltete Desinfektionsstufe zusätzlich abzusichern (UV, Ozon, Chlorung, anodische Oxidation, etc.). Der Betrieb solcher Desinfektionseinheiten ist mit großem Aufwand verbunden.

Die thermische Desinfektion von Wasserbehandlungseinheiten ist an sich bekannt (z. B. EP 0 372 293 A, EP 0 462606 A; US 4,610, 790; EP 0621 239 A).

Die Erfindung sicht eine Trinkwasserhausinstallation gemäß Anspruch 1 von.

Die Heizeinrichtung ist in oder an der Wasserbehandlungseinheit ausgebildet.

Grundsätzlich kann die Wasserbehandlungseinheit auch im Warmwasserteil einer Trinkwasserhausinstallation angeordnet sein. Durch die gesonderte Heizeinrichtung läßt sich über einen vorbestimmten Zeitraum auch eine höhere, beispielsweise über 60°C, vorzugsweise über 70°C liegende Temperatur erzielen, die eine zuverlässige Desinfektion erlaubt. Es ist also nicht nötig, daß der Boiler diese hohe Temperatur aufweist.

Zur Durchführung der Hitzedesinfekton sind folgende Komponenten bzw. Voraussetzungen günstig:
- Das lonenaustauscher-, Adsorbentien- und Filtermaterial der Wasserbehandlungseinheit, aber auch das Material des Gehäuses bzw. die mit dem heißen Wasser in Berührung kommenden Teile der Anlage sind auf die für die Desinfektion erforderliche Temperatur ausgelegt (Ionenaustauscherharze vertragen üblicherweise Temperaturen bis 110°C, die Kalkfiltermaterialien und Aktivkohle vertragen Temperaturen wesentlich höher als 100°C). Gegebenenfalls vorhandene hitzeempfindliche Teile, wie z. B. Dichtungen können leicht gegen hitzefeste Teile ausgetauscht werden, sodaß auch eine Nachrüstung bestehender Anlagen möglich ist.
- Die Wasserbehandlungseinheit kann während der Hitzedesinfektion sauber vom Kaltwasser abgetrennt werden, wenn sie im Kaltwasserteil angeordnet ist. Über einen Bypass wird die Versorgung mit Wasser in der nachfolgenden Anlage sichergestellt.
- Die Heizeinrichtung für die Filter- oder Ionenaustauscheranlage kann verschieden ausgebildet sein, z. B. Heizmanschetten auf der Außenseite, Heizelement im entsprechenden Behältnis.
- Vorrichtungen zur Steuerung der Aufheizung, der Einhaltung der vorgesehenen Einwirkzeiten und zum Ausspülen des heißen Wassers sind für den Fachmann leicht zu realisieren. Dabei muß sichergestellt sein, daß die notwendige Sterilisationstemperatur überall im entsprechenden Ionenaustauscher- bzw. Filtermaterial erreicht wird.
- Vorrichtung zum Ausspülen des heißen Wassern in den Abfluß.

Eingehende Untersuchungen der Anmelderin mit einem schwachsauren lonausaustauscherharz haben gezeigt, daß beispielsweise Kulturen von pseudomonas aeruginosa bei 60°C und bei Einwirkzeit von 1 Stunde sicher abgetötet werden. Bei einer Temperatur von 70°C reichen 15 Minuten zur sicheren Abtötung dieser Kulturen.

Die Fig.1 zeigt ein erstes Ausführungsbeispiel einer erfindungsgemäßen Vorrichtung zum Desinfizieren einer Wasserbehandlungseinheit im Kaltwasserteil einer Trinkwasserhausinstallation,
die Fig. 2 zeigt ein Ausführungsbeispiel, bei dem die Wasserbehandlungseinheit, welche durch Hitze sterilisiert wird, im Warmwasserteil einer Trinkwasserhausinstallation angeordnet ist.

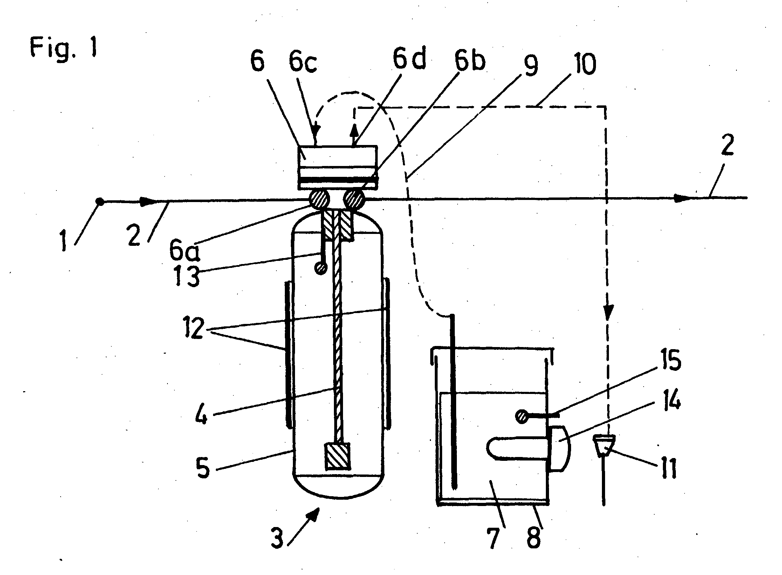

Die Fig. 1 zeigt den Eingang 1 einer Trinkwasserhausinstallation, bei der Kaltwasser über die Leitung 2 einströmt. In dieser Leitung 2, die dann weiters in das Haus bzw. in die Wohnung führt, ist eine Wasserbehandlungseinheit 3 mit einem Ionentauscher 4 angeordnet. Am Kopf des Behälters 5 der Wasserbehandlungseinheit 3 ist ein an sich bekanntes Vierwegventil 6 angeordnet. Dieses hat vier Anschlüsse 6a, 6b, 6c und 6d. Im Normalbetrieb strömt über den Einlaß 6a Wasser ins Innere des Behälters 5, in dem der Ionentauscher 4 angeordnet ist. Das aufbereitete Wasser strömt dann über den Ausgang 6b in das Haus bzw. in die Wohnung. Wenn der Ionentauscher aufbereitet werden muß, kann das Ventil 6 in eine andere Stellung umschalten, bei der die Anschlüsse 6a und 6b im Sinne eines Bypasses direkt miteinander verbunden sind, d. h. das Wasser strömt in diesem Fall nicht über den Behälter 5. Dafür ist der Einlaß 6c und der Auslaß 6d offen und mit dem Behälter 5 verbunden. Es kann daher Salzsole 7 aus einem Solebehälter 8, beispielsweise über eine nicht dargestellte Pumpe und die Leitung 9 in den Behälter 5 zur Aufbereitung des Ionenaustauschers 4 gefüllt werden. Nach dem Regenerierprozeß kann diese Sole über die Leitung 10 in den Abfluß 11 geführt werden.

Soweit ist die Anlage Stand der Technik und bedarf daher keiner weiteren Beschreibung.

Erfindungsgemäß ist nun vorgesehen, diese im Kaltwasserteil angeordnete Wasserbehandlungseinheit 3 durch Hitzeeinwirkung zu desinfizieren. Dazu bestehen mehrere Möglichkeiten, beim dargestellten Ausführungsbeispiel sind zwei davon dargestellt.

Die erste Möglichkeit besteht darin, an den wärmeleitenden Behälter 5 Heizmanschetten 12 anzulegen. Mit diesen ist es möglich direkt das im Behälter 5 befindliche Wasser und damit den Ionentauscher 4 zu desinfizieren. Ein Temperatursensor 13 kann mit einer nicht dargestellten Steuereinheit verbunden sein, die das Einwirken einer bestimmten Temperatur über eine bestimmte Zeit in periodisch einstellbaren Abständen sicherstellt. Während des Desinfektionsprozesses ist die Wasserbehandlungseinheit von der übrigen Trinkwasserhausinstallation durch das Ventil 6 getrennt. Das Wasser kann dann im Bypass von der Stelle 6a zur Stelle 6b fließen.

Eine alternative Möglichkeit zur thermischen Desinfektion ist der Einfachheit halber ebenfalls in Fig. 1 dargestellt. Sie besteht darin, die Salzsole 7 mittels eines Heizstabes 14 aufzuwärmen und bei der Regeneration des Ionenaustauschers 4, bei der die Wasserbehandlungseinheit ohnehin von der Trinkwasserhausinstallation getrennt ist, gleichzeitig die thermische Desinfektion vorzunehmen. Es wird einfach die Sole 7 aufgeheizt und die heiße Sole in den Behälter 5 gefüllt. Dies hat noch den zusätzlichen Vorteil, daß der Regenerationsvorgang selbst deutlich schneller abläuft und die Sole ein besonders effizientes Desinfektionsmittel ist. Zur Desinfektion kann die Temperatur der Kochsalzsole über 70°C, vorzugsweise über 80°C, betragen. Nach der Regeneration bzw. Desinfektion kann die heiße Sole mittels Spülwasser in den Abfluß gespült werden. Die Temperaturüberwachung erfolgt über den Sensor 15.

Im allgemeinen wird es nicht nötig sein, die Heizmanschetten 12 und den Heizstab bei einer Einrichtung gleichzeitig vorzusehen. Vielmehr wird es reichen, entweder die Heizmanschetten oder den Heizstab 14 zu verwenden.

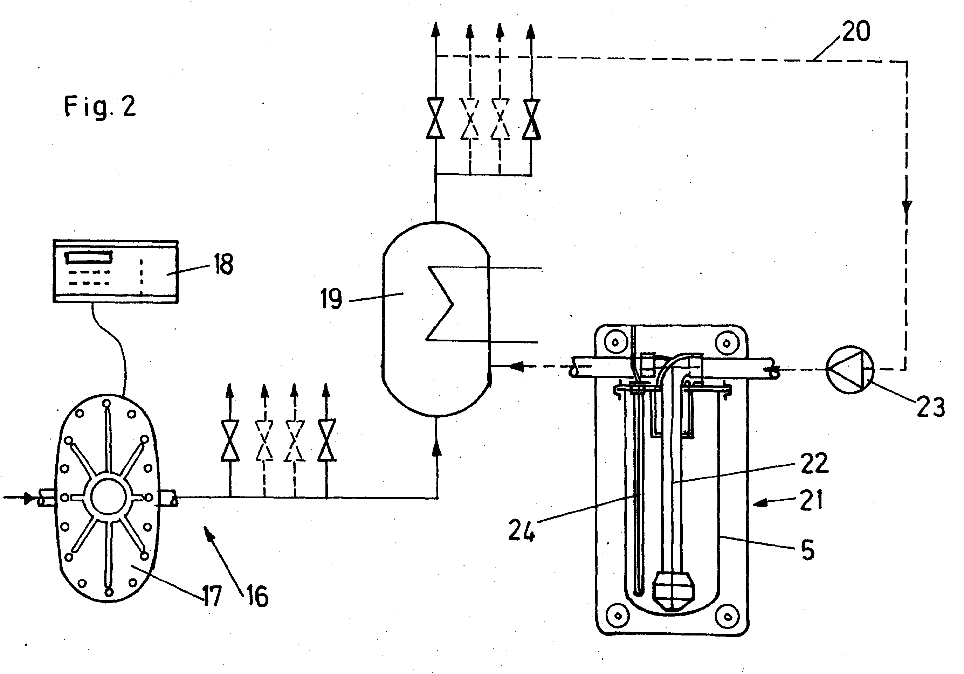

Wenngleich mit der Erfindung bevorzugt im Kaltwasserteil einer Trinkwasserhausinstallation angeordnete Wasserbehandlungseinheiten thermisch desinfiziert werden können, kann die Erfindung grundsätzlich auch bei einer im Warmwasserteil angeordneten Wasserbehandlungseinheit angewandt werden, wie dies in Fig. 2 dargestellt ist.

Bei dem in Fig. 2 dargestellten Ausführungsbeispiel ist im Kaltwasserteil 16 eine erste Wasserbehandlungseinheit 17 vorgesehen, die beispielsweise auf elektrostatischem Wege arbeitet und mit einem Steuergerät 18 verbunden ist. Diese Wasserbehandlungseinheit 17 wird bei dem dargestellten Ausführungsbeispiel nicht thermisch desinfiziert.

Im Warmwasserteil ist ein Warmwasseraufbereiter 19 (Boiler) vorgesehen. In der Umlaufleitung 20 ist eine zweite Wasserbehandlungseinheit 21 vorgesehen, die einen Ionentauscher 22 aufweist. Die Umwälzpumpe ist mit 23 bezeichnet. Im Gefäß 5 der Wasserbehandlungseinheit 21 ist eine als Heizstab ausgebildete Heizeinrichtung 24 vorgesehen, die vom Warmwasseraufbereiter 19 gesondert ist und damit eine effiziente und gezielte Aufheizung des Wassers in der Wasserbehandlungseinheit 21 erlaubt und diese bzw. vor allem den darin angeordneten katalytisch wirkenden Ionentauscher 22 thermisch zu desinfizieren.

Die Erfindung läßt sich nicht nur auf Wasserbehandlungseinheiten mit Ionentauschern anwenden, sondern auch auf Filter oder Adsorbentien.

## Patentansprüche

1. Trinkwasserhausinstallation mit einem Kaltwasserteil oder mit einem Warmwasserteil mit einem im Warmwasserteil angeordneten Warmwasseraufbereiter (19), wobei im Kaltwasserteil oder im Warmwasserteil eine Wasserbehandlungseinheit (3, 21), welche einen Filter und/oder ein Adsorbens und/oder einen, insbesondere katalytisch wirkenden, Ionenaustauscher (4, 22) umfasst, vorgesehen ist, **gekennzeichnet durch** eine Vorrichtung zum Desinfizieren der Wasserbehandlungseinheit (3, 21), welche eine, im Fall des Warmwasserteils vom Warmwasseraufbereiter (19) gesonderte, Heizeinrichtung (12, 14, 24) aufweist, wobei die Heizeinrichtung (12, 14, 24) derart angeordnet ist bzw. mit der Wasserbehandlungseinheit (3, 21) in Verbindung steht, dass das Wasser in der Wasserbehandlungseinheit (3, 21) zeitweise auf eine Temperatur von über 60°, vorzugsweise über 70°, aufheizbar ist, wobei eine Ventilanordnung (6) zum zeitweisen Abtrennen der Wasserbehandlungseinheit (21) von der übrigen Trinkwasserhausinstallation vorgesehen ist, und wobei weiters ein Bypass zur Wasserbehandlungseinheit (3, 21) vorgesehen ist, um bei von der Trinkwasserhausinstallation abgetrennter Wasserbehandlungseinheit (3, 21) die Wasserversorgung aufrecht zu erhalten, wobei die Heizeinrichtung (12, 14) in oder an der Wasserbehandlungseinheit (3) angeordnet ist oder die Heizeinrichtung (14) in einem von der Wasserbehandlungseinheit (3) gesonderten Gefäß (8) angeordnet ist, das über eine Leitung (9) mit der Wasserbehandlungseinheit (3) in Verbindung steht, und das gesonderte Gefäß (8) das Solegefäß zum Aufbereiten eines Ionentauschers (4) in der Wasserbehandlungseinheit (3) ist.

2. Trinkwasserhausinstallation nach Anspruch 1, **gekennzeichnet durch** eine Vorrichtung zum Ausspülen des in der Wasserbehandlungseinheit (3, 21) vorhandenen, aufgeheizten Wassers in einen Abfluss (11).

3. Trinkwasserhausinstallation nach einem der Ansprüche 1 oder 2, **dadurch gekennzeichnet, dass** die vorzugsweise als Heizstab (24) ausgebildete Heizeinrichtung in einem wassergefüllten Behälter (5) der Wasserbehandlungseinheit (3) selbst angeordnet ist.

4. Trinkwasserhausinstallation nach einem der Ansprüche 1 oder 2, **dadurch gekennzeichnet, dass** die vorzugsweise als Heizmanschette (12) ausgebildete Heizeinrichtung außen an einem wärmeleitenden, wassergefüllten Behälter (5) der Wasserbehandlungseinheit (3) angeordnet ist.

## Claims

1. A domestic drinking water installation comprising a cold water portion or a hot water portion with a hot water producing device (19) arranged in the hot water portion, wherein provided in the cold water portion or in the hot water portion is a water treatment unit (3, 21) which includes a filter and/or an adsorbent and/or an in particular catalytically acting ion exchanger (4, 22), **characterised by** a device for disinfecting the water treatment unit (3, 21), having a heating device (12, 14, 24) which in the case of the hot water portion is separate from the hot water producing device (19), wherein the heating device (12, 14, 24) is so arranged or is so connected to the water treatment unit (3, 21) that the water in the water treatment unit (3, 21) is heatable at times to a temperature of over 60°C, preferably over 70°C, wherein there is provided a valve arrangement (6) for separating the water treatment unit (21) at times from the rest of the domestic drinking water installation, and wherein there is further provided a bypass in relation to the water treatment unit (3, 21) to maintain the water supply in the case of a water treatment unit (3, 21) which is separated from the domestic drinking water installation, wherein the heating device (12, 14) is arranged in or at the water treatment unit (3), or the heating device (14) is arranged in a vessel (8) which is separated from the water treatment unit (3) and which is connected to the water treatment unit (3) by way of a conduit (9) and the separate vessel (8) is the brine vessel for treatment of an ion exchanger (4) in the water treatment unit (3).

2. A domestic drinking water installation according to claim 1 **characterised by** an apparatus for flushing out the heated water present in the water treatment unit (3, 21) into a drain (11).

3. A domestic drinking water installation according to one of claims 1 and 2 **characterised in that** the heating device which is preferably in the form of a heating bar (24) is arranged in a water-filled container (5) of the water treatment unit (3) itself.

4. A domestic drinking water installation according to one of claims 1 and 2 **characterised in that** the heating device which is preferably in the form of a heating jacket (12) is arranged externally on a heat-conducting, water-filled container (5) of the water treatment unit (3).

## Revendications

1. Installation domestique de production d'eau potable, avec une partie eau froide ou avec une partie eau chaude, équipée d'un préparateur d'eau chaude (19) disposé dans la partie eau chaude, sachant que, dans la partie eau froide ou dans la partie eau chaude est prévue une unité de traitement d'eau (3, 21), qui comprend un filtre et/ou un adsorbant et/ou un échangeur d'ions (4, 22) en particulier à effet catalytique, **caractérisée par** un dispositif pour désinfecter l'unité de traitement d'eau (3, 21), présentant un dispositif de chauffage (12, 14, 24), séparé du préparateur d'eau chaude (19) dans le cas de la partie d'eau chaude, le dispositif de chauffage (12, 14, 24) étant disposé de manière que, ou étant relié à l'unité de traitement d'eau (3, 21), de manière que l'eau se trouvant dans l'unité de traitement d'eau (3, 21) soit susceptible d'être chauffée, par moments, à une température supérieure à 60°, de préférence supérieure à 70°, un dispositif à soupape (6) étant prévu, pour séparer par moments l'unité de traitement d'eau (21) du reste de l'installation domestique de production d'eau potable, et où en outre est prévu une dérivation par rapport à l'unité de traitement d'eau (3, 21), afin de conserver l'alimentation en eau lorsque l'unité de traitement d'eau (3, 21) est isolée de l'installation domestique de production d'eau potable, où le dispositif de chauffage (12, 14) est disposé dans, ou sur, l'unité de traitement d'eau (3), ou le dispositif de chauffage (14) est disposé dans un récipient (8), séparé de l'unité de traitement d'eau (3) et relié, par une conduite (9), à l'unité de traitement d'eau (3), et le récipient (8) séparé est le récipient à saumure prévu pour la préparation d'un échangeur d'ions (4) dans l'unité de traitement d'eau (3).

2. Installation domestique de production d'eau potable selon la revendication 1, **caractérisée par** un dispositif, pour effectuer le rinçage, avec chasse dans une évacuation (11), de l'eau chauffée, se trouvant dans l'unité de traitement d'eau (3, 21).

3. Installation domestique de production d'eau potable selon l'une des revendications 1 ou 2, **caractérisée en ce que** le dispositif de chauffage, réalisé de préférence sous forme de barreau chauffant (24) est disposé dans un récipient (5), rempli d'eau, de l'unité de traitement d'eau (3) elle-même,

4. Installation domestique de production d'eau potable selon l'une des revendications 1 ou 2, **caractérisée en ce que** le dispositif de chauffage, réalisé de préférence sous forme de manchette chauffante (12), est disposé extérieurement, sur un récipient (5) rempli d'eau, conducteur de la chaleur, de l'unité de traitement d'eau (3).
